## Europäisches Patentamt
## European Patent Office
## Office européen des brevets

(19)

(11) Numéro de publication: **0 127 209**
**B1**

(12) # FASCICULE DE BREVET EUROPÉEN

(45) Date de publication du fascicule du brevet:
21.09.88

(51) Int. Cl.⁴: **A 61 C 15/00,** A 46 B 9/04

(21) Numéro de dépôt: **84200544.9**

(22) Date de dépôt: **17.04.84**

(54) **Dispositif pour nettoyer les faces proximales de dents.**

(30) Priorité: **29.04.83 BE 210669**

(43) Date de publication de la demande:
**05.12.84 Bulletin 84/49**

(45) Mention de la délivrance du brevet:
**21.09.88 Bulletin 88/38**

(84) Etats contractants désignés:
**AT CH DE FR GB IT LI LU NL SE**

(56) Documents cité:
**CH-A-574 224**
**DE-C-322 089**
**DE-C-548 360**
**DE-U-8 221 813**
**US-A-2 042 239**
**US-A-2 637 870**
**US-A-3 934 298**

(73) Titulaire: **d'Argembeau, Etienne Yves G. J., 24 Rue de Belle- Vue, B-1050 Bruxelles (BE)**

(72) Inventeur: **d'Argembeau, Etienne Yves G. J., 24 Rue de Belle- Vue, B-1050 Bruxelles (BE)**

(74) Mandataire: **De Brabanter, Maurice, Bureau VANDER HAEGHEN 63 Avenue de la Toison d'Or, B-1060 Bruxelles (BE)**

LIBER, STOCKHOLM 1988

## Description

La présente invention est relative à un dispositif de nettoyage des faces mésiales et distales ou faces proximales des dents, c'est-à-dire des faces en regard l'une de l'autre de deux dents contiguës, ce dispositif comprenant un manche allongé et deux rangées constituées de poils individuels, lesdites rangées étant espacées et parallèles entre elles et élastiquement déformables, chaque poil des rangées étant attaché au manche par une extrémité opposée à son extrémité libre, lesdites rangées s'étendant chacune dans un plan principal sensiblement perpendiculaire à un axe longitudinal du manche.

On sait que les faces proximales des dents sont fréquemment le siège de maladies, notamment de caries. Aussi, convient-il de maintenir ces faces proximales aussi propres que possible, d'autant plus que des débris d'aliments y sont fréquemment retenus.

Il est connu d'utiliser des cure-dents pour déloger les débris d'aliments des intervalles entre dents adjacentes ces cure-dents sont certes efficaces à cette fin, mais ils ne permettent pas un nettoyage des surfaces en regard l'une de l'autre de dents contiguës. A ces fins de nettoyage, il est connu d'utiliser des fils textiles cirés, que l'on soumet à un mouvement de haut en bas ou vice-versa, après les avoir introduits entre deux dents contiguës. L'emploi de ces fils prend beaucoup de temps, car après les avoir introduits entre deux dents contiguës, il faut assurer un déplacement de ces fils depuis le plan apical des dents vers la gencive ou vice versa, de façon à bien balayer les faces proximales des dents. Il est également connu d'utiliser des brosses en forme de queue-de-rat plus ou moins conique pour nettoyer les faces proximales de dents contiguës. L'efficacité de ces brosses connues est souvent faible, car dans bien des cas l'intervalle entre les faces proximales de dents contiguës est insuffisant pour livrer passage aux poils de ces brosses qui sont plantés dans l'extrémité d'un support.

On connaît également, par les documents US-A-2 637 870 et DE-C-322 089, des brosses à dents comprenant un manche muni à une extrémité d'une série de feuillets en caoutchouc ou de rangées de poils et/ou de lamelles ne permettant pas le nettoyage des faces proximales des dents, étant donné que ces feuillets ou rangées de poils sont trop nombreux pour permettre un nettoyage des faces proximales des dents, ainsi que pour permettre à deux feuillets ou rangées successifs de pénétrer efficacement dans l'espace interdentaire.

On connaît aussi par les documents US-A-3 934 298 et US-A-2 042 239 des brosses à dents munies respectivement de rangées de touffes de poils et d'éléments élastiques triangulaires alternant avec de telles rangées. Dans ces brosses, les éléments triangulaires ou rangées de poils successifs utilisés pour le nettoyage des faces proximales des dents ne peuvent s'infléchir l'un vers l'autre, de sorte que la pression de brossage appliquée au manche de la brosse n'est pas transmise de façon uniforme aux extrémités des touffes de poils, ce qui peut provoquer des surpressions locales endommageant la plaque dentaire.

Enfin, on connaît également par le document CH-A-574 224 une brosse à dents pour le nettoyage des faces latérales proximales de dents constituée d'un manche muni à ses extrémités de rangées parallèles de lamelles élastiques de forme triangulaire. L'utilisation de cette brosse ne permet pas l'infléchissement l'une vers l'autre de deux lamelles adjacentes, parce que ces lamelles se déformeront toujours dans une direction perpendiculaire à leur bord de fixation à la tête de la brosse qui les porte.

La présente invention a pour objet un dispositif de nettoyage de faces latérales proximales courbes de dents du type défini dans le premier paragraphe du présent mémoire, ce dispositif étant essentiellement caractérisé en ce que les poils de chaque rangée sont reliés entre eux à leur extrémité libre, les poils desdites rangées sont tous sensiblement de même longueur et la distance entre les deux rangées est d'environ 1,5 à 3 mm, de manière telle que, lorsque lesdites rangées de poils sont pressées contre la face latérale de deux dents adjacentes, les extrémités libres des deux rangées constituées par les extrémités libres desdits poils s'infléchissent l'une vers l'autre pour balayer par leurs surfaces latérales lesdites faces proximales courbes de ces deux dents adjacentes et pénètrent dans l'espace entre celles-ci.

Selon une particularité de l'invention, le dispositif comporte des moyens tendant à maintenir écartées l'une de l'autre les deux rangées de poils.

D'autres détails de l'invention ressortiront de la description suivante des dessins annexés au présent mémoire qui représentent schématiquement et à titre d'exemples seulement plusieurs formes de réalisation d'un dispositif suivant la présente invention.

Dans ces dessins:

- la figure 1 est une vue en perspective d'un dispositif de nettoyage des faces proximales des dents suivant l'invention;
- la figure 2 est une vue de face du dispositif montré à la figure 1;
- la figure 3 est une vue schématique montrant partiellement le dispositif montré aux figures 1 et 2 lors de son utilisation pour le nettoyage des faces proximales de deux dents contiguës;
- la figure 4 est une vue en plan par dessus de deux dents contiguës avec le dispositif selon les figures 1 et 2 dans la position de service où les poils sont engagés entre les dents, et
- les figures 5 et 6 sont des vues de face à plus grande échelle montrant deux autres formes de réalisation du dispositif suivant l'invention.

Dans ces différentes figures qui représentent des dispositifs suivant l'invention à plus grande échelle qu'en réalité, les mêmes notations de référence désignent des éléments identiques.

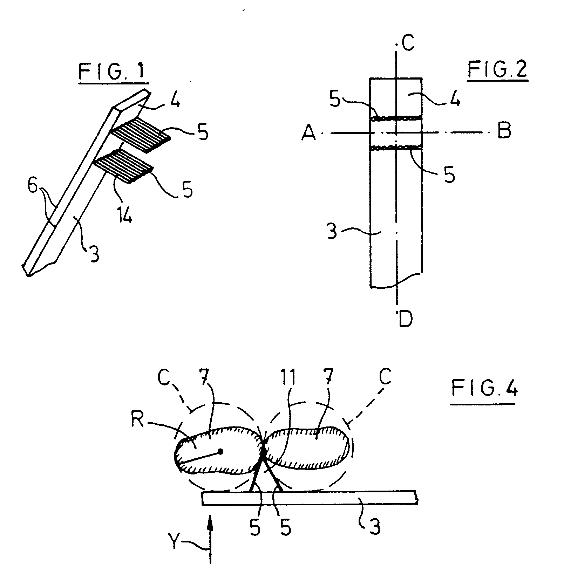

Le dispositif de nettoyage des faces proximales de dents contiguës montré à la figure 1 comporte un manche allongé 3 et deux rangées 5 constituées de poils individuels. Le manche 3 peut être constitué par un bâtonnet qui peut être en matière plastique, en bois, en métal ou en toute autre matière. Les rangées 5 de poils sont espacées et parallèles entre elles et clastiquement déformables. Les poils des rangées sont attachés en manche 3 par une extrémité opposée à leur extrémité libre.

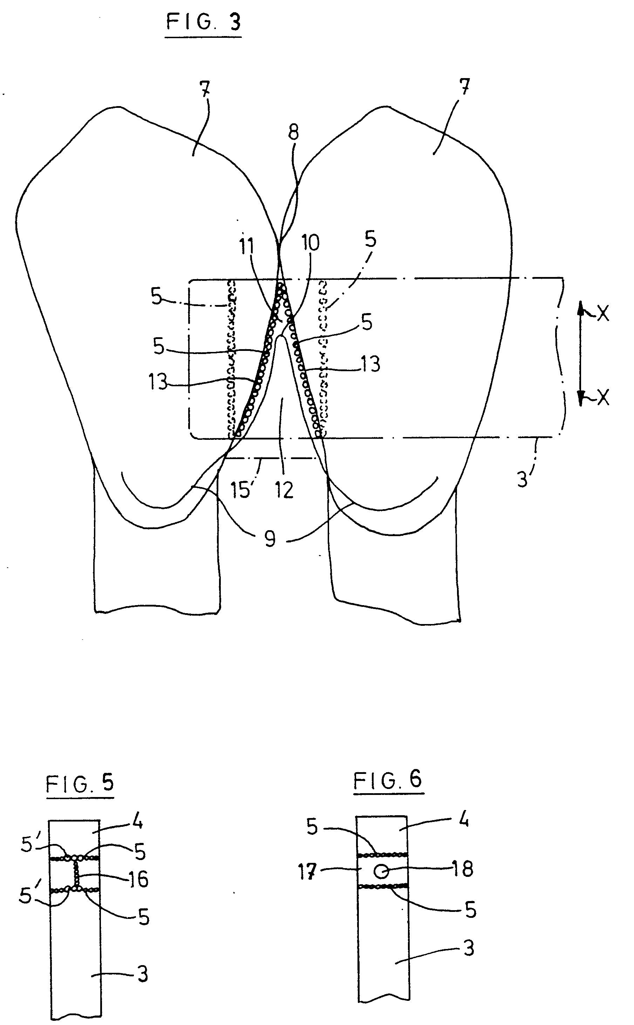

Aux figures 1 et 2 on a représenté une forme de réalisation du dispositif suivant l'invention, comportant deux séries ou rangées 5 parallèles entre elles de poils 5 fixés à une face 4 du manche 3, cette face 4 pouvant être plane ou légèrement convexe. Bien qu'aux figures 1 et 2, chaque série ou rangée de poils 5 présente seulement une rangée de poils, on peut, dans le cadre de l'invention, prévoir que chaque série de poils comporte deux ou plus de deux rangées de poils, les poils d'une rangée pouvant éventuellement être en quinconce vis-à-vis de ceux de la ou des rangées adjacentes. Comme on le voit à la figurer 2, le plan de symétrie des séries ou rangées de poils 5, symbolisé par une droite en traits mixtes A - B, est sensiblement perpendiculaire à l'axe longitudinal C - D du manche 3.

Sur la figure 1, le manche 3 présente une section transversale sensiblement rectangulaire et des arêtes longitudinales vives 6. Il est évident que la forme du manche 3 peut varier et que ses arêtes doivent, de préférence, être arrondies. La longueur du manche est avantageusement de quelques centimètres, par exemple de 5 à 10 centimètres. Cette longueur doit être telle que l'utilisateur puisse atteindre avec les séries ou rangées de poils 5 les intervalles entre les dents de la mâchoire inférieure et de la mâchoire supérieure, tant du côté lingual que du côté vestibulaire, ainsi que le fond du sillon de la gencive couvrant la face postérieure des dernières molaires.

La figure 3 montre, à grande échelle, deux dents adjacentes 7 en contact l'une avec l'autre en 8. La ligne 9 représente le bord libre de la gencive, dont la crête interdentaire est montrée en 10. Cette figure 3 montre la position qu'occupent les deux rangées de poils 5 parallèles entre elles (représentées en traits interrompus) avant l'utilisation du dispositif. Sur cette même figure, on voit que, lorsque les deux rangées de poils 5 sont introduites dans l'espace interdentaire 11 situé en dessous du point de contact 8 et formant le triangle interdentaire schématisé en 12, les poils 5 des deux rangées parallèles s'appliquent sur les faces proximales opposées 13 des dents 7 en épousant la forme de ces faces 13. A partir du point de contact 8 entre les dents 7 vers la gencive 9, les rangées de poils 5 divergent, comme on le voit clairement à la figure 3. Tandis que les rangées de poils 5 sont ainsi appliquées sur les faces proximales 13 des dents 7, on les soumet à un mouvement de va-et-vient dans le sens des flèches X - X, de sorte que les poils 5 des deux rangées balayent par leurs faces latérales 14 les faces proximales 13 des dents et exercent sur ces faces un effet de nettoyage.

A la figure 4, on voit en plan l'inflexion que subissent les poils des deux rangées de poils 5 lorsqu'elles ont été introduites dans le sens de la flèche Y dans l'espace interdentaire 11.

Les extrémités des poils 5, opposées à leurs extrémités fixées au manche 3, sont soudées entre elles dans chaque rangées de poils 5. Les poils 5 peuvent aussi être soudés localement entre eux à d'autres endroits.

La distance entre les séries ou rangées parallèles de poils 5 est, de préférence, sensiblement égale à la largeur interdentaire maximale, c'est-à-dire à la longueur de la base 15 du triangle interdentaire 12 (voir la figure 3), cette longueur étant, en pratique, d'environ 1,5 à 3 millimètres.

Quant à la hauteur des poils 5, par rapport à la face 4 du manche 3, elle est, de préférence, au moins égale au rayon R (voir figure 4) de la plus grande circonférence C dans laquelle sont inscrites les plus grosses dents, cette circonférence correspondant sensiblement aux couronnes des dents 7 montrées à la figure 4.

Les poils (qui peuvent être en matière plastique, par exemple en nylon) des rangées de poils 5 montrées aux figures 1 à 4 peuvent avoir une section de 0,1 à 0,3 millimètre et chaque poil peut être monofilamentaire ou polyfilamentaire.

La figure 5 montre une autre forme de réalisation du dispositif suivant l'invention, dans laquelle le manche 3 porte deux rangées de poils 5, certains de ces poils désignés par la notation 5' ayant une plus grande section transversale que les autres, dans le but de rigidifier davantage les rangées de poils 5.

Suivant l'invention, on munit le dispositif comportant deux rangées de poils parallèles entre elles de moyens tendant à les maintenir écartées l'une de l'autre. Ces moyens sont constitués, dans la forme de réalisation illustrée à la figure 5, d'une série de poils 16 qui s'étend entre les rangées de poils 5 transversalement à ces rangées de poils.

A la figure 6, on a représenté une forme de réalisation du dispositif analogue à celle montrée à la figure 5, si ce n'est que les moyens tendant à maintenir les rangées de poils 5 écartées l'une de l'autre et à appliquer fermement ces rangées de poils 5 sur les faces latérales proximales de deux dents contiguës, au cours de l'utilisation du dispositif, sont constitués par un ou plusieurs jets d'eau ou d'un autre fluide amenés dans l'intervalle 17 entre les rangées de poils 5 par un ou plusieurs trous 18 ménagés dans le manche 3, ce ou ces trous 18 étant reliés à un conduit (non montré) ménagé dans le manche et raccordé à une source d'un fluide sous pression, tel que de l'eau ou de l'air.

Il est évident que l'invention n'est pas limitée aux détails décrits plus haut et que de nombreuses modifications peuvent être apportées à ces détails sans sortir du cadre de l'invention, tel qu'indiqué dans les revendicaitons ci-jointes.

Ainsi, l'extrémité libre des rangées de poils 5 peut être amincie ou arrondie, pour faciliter leur insertion dans l'espace interdentaire.

## Revendications

1. Dispositif de nettoyage des faces latérales proximales courbes (13) de dents, comprenant un manche allongé (3) et deux rangées (5) constituées de poils individuels, lesdites rangées étant espacées et parallèles entre elles et élastiquement déformables, chaque poil des rangées (5) étant attaché au manche par une extrémité opposée à son extrémité libre, lesdites rangées s'étendant chacune dans un plan principal (A - B) sensiblement perpendiculaire à un axe longitudinal (C - D) du manche (3), caractérisé en ce que les poils de chaque rangée (5) sont reliés entre eux à leur extrémité libre, les poils desdites rangées (5) sont tous sensiblement de même longueur et la distance entre les deux rangées est d'environ 1,5 à 3 mm, de manière telle que, lorsque lesdites rangées (5) de poils sont pressées contre la face latérale (13) de deux dents adjacentes (7), les extrémités libres des deux rangées constituées par les extrémités libres desdits poils s'infléchissent l'une vers l'autre pour balayer par leurs surfaces latérales (14) lesdites faces proximales courbes (13) de ces deux dents adjacentes et pénètrent dans l'espace entre celles-ci.

2. Dispositif suivant la revendication 1, caractérisé en ce qu'il comporte des moyens (16, 18) tendant à maintenir écartées l'une de l'autre les deux rangées (5) de poils.

## Patentansprüche

1. Vorrichtung zum Reinigen der gewölbten proximalen Seitenflächen (13) von Zähnen, umfassend einen länglichen Stiel (3) und zwei aus einzelnen Borsten gebildete Reihen (5), welche Reihen im Abstand von- und parallel zueinander angeordnet und elastisch verformbar sind, wobei jede Borste der Reihen (5) mit ihrem dem freien Ende gegenüberliegenden Ende am Stiel befestigt ist und sich die Reihen jeweils in einer Hauptebene (A - B) erstrecken, die im wesentlichen senkrecht zu einer Längsachse (C - D) des Stiels (3) ist, dadurch gekennzeichnet, daß die Borsten jeder Reihe (5) an ihrem freien Ende miteinander verbunden sind, wobei die Borsten der Reihen (5) alle im wesentlichen dieselbe Länge aufweisen und der Abstand zwischen den beiden Reihen etwa 1,5 bis 3 mm beträgt, sodaß sich bei Anpressen der Borstenreihen (5) an die Seitenfläche (13) zweier nebeneinanderliegender Zähne (7) die freien Enden der beiden Reihen, die durch die freien Enden der Borsten gebildet sind, zwecks Bestreichens der gewölbten proximalen Flächen (13) dieser beiden nebeneinanderliegenden Zähne mit ihren seitlichen Flächen (14) zueinander biegen und in den Raum zwischen denselben eindringen.

2. Vorrichtung nach Anspruch 1, dadurch gekennzeichnet, daß sie Mittel (16, 18) umfaßt, die die beiden Borstenreihen (5) voneinander im Abstand halten.

## Claims

1. Device for cleaning curved proximal side faces (13) of teeth, comprising an elongate handle (3) and two rows (5) constituted of individual bristles, said rows being spaced and parallel between them and elastically deformable, each bristle of rows (5) being attached to the handle by one end opposed to its free end, said rows being each disposed in a principal plane (A - B) substantially perpendicular to a longitudinal axis (C - D) of the handle (3), characterized in that the bristles of each row (5) are bound between them at their free end, all the bristles of said rows (5) have substantially the same length and the distance between the two rows is of about 1,5 to 3 mm, in such a way that, when said rows (5) of bristles are pressed against the side face (13) of two adjacent teeth (7), the free ends of the two rows constituted by the free ends of said bristles are bent towards each other for sweeping by their lateral surfaces (14) said curved proximal faces (13) of these two adjacent teeth and penetrate into the space between these.

2. Device according to claim 1, characterized in that it comprises means (16, 18) tending to keep the two rows (5) of bristles apart from each other.

FIG. 1

4
5
5
6
14
3

FIG. 2

C
5
4
A · — — · B
5
3
D

FIG. 4

C  7    11  7    C
R
Y
5  5    3

FIG. 3

FIG. 5

FIG. 6